# EUROPÄISCHE PATENTSCHRIFT

(11) **EP 3 270 066 B1**
(45) Veröffentlichungstag und Bekanntmachung des Hinweises auf die Patenterteilung: **24.02.2021**
(21) Anmeldenummer: 17180684.7
(22) Anmeldetag: 11.07.2017
(51) Int. Cl.: F24D 11/02, F24D 17/00, F24D 17/02, F24D 19/10, F28D 20/02, F24S 80/30, F24S 50/00, F24S 20/40, F24S 90/00

(54) **ENERGIEVERSORGUNGSSYSTEM MIT EINEM LATENTWÄRMESPEICHER UND VERFAHREN ZUM BETREIBEN EINES ENERGIEVERSORGUNGSSYSTEMS**
ENERGY SUPPLY SYSTEM COMPRISING A LATENT HEAT ACCUMULATOR AND METHOD FOR OPERATING AN ENERGY SUPPLY SYSTEM
SYSTÈME D'APPROVISIONNEMENT EN ÉNERGIE POURVU D'UN ACCUMULATEUR DE CHALEUR LATENTE ET PROCÉDÉ DE FONCTIONNEMENT D'UN SYSTÈME D'APPROVISIONNEMENT EN ÉNERGIE

(30) Priorität: 12.07.2016 DE 102016112784
(43) Veröffentlichungstag der Anmeldung: 17.01.2018
(73) Patentinhaber: Viessmann Werke GmbH & Co. KG, 35107 Allendorf (DE)
(72) Erfinder: FUCHS, Sven, 70186 Stuttgart (DE); VAUPEL, Manfred, 35066 Frankenberg (DE); PFANNKUCH, Moritz, 70197 Stuttgart (DE); BROCKMANN, Robert, 60316 Frankfurt (DE); LÜDEMANN, Heiko, 74223 Flein (DE)
(74) Vertreter: Kaufmann, Ursula Josefine

(56) Entgegenhaltungen:
- WO-A1-2009/109220
- WO-A2-2012/032159
- CH-A1- 705 478
- DE-A1-102012 104 996
- DE-A1-102014 000 671
- DE-U1- 20 301 965
- DE-U1- 29 914 113
- DE-U1-202011 003 667
- FR-A1- 2 957 136
- US-A- 4 063 546
- US-A- 4 127 103
- US-A- 4 283 914
- US-A1- 2013 333 694
- US-A1- 2016 047 556
- US-A1- 2016 079 915

## Beschreibung

### Stand der Technik

Die Erfindung betrifft ein Energieversorgungssystem sowie ein Verfahren zum Betreiben eines Energieversorgungssystems mit einem Latentwärmespeicher.

Luftkollektoren übernehmen als Bestandteil einer Energiespeichertechnik, z.B. einer Eisspeichertechnik, unterschiedliche zentrale Aufgaben. Sie dienen einerseits als Primärwärmequelle für Sole-Luft-Wärmepumpen, andererseits als Wärmesenke der anfallenden Abwärme im aktiven Kühlbetrieb der Wärmepumpe. Weiterhin dienen sie als Wärmequelle zur Regeneration des Eisspeichers. Dabei kommen gerade bei leistungsstarken Anlagen für Gewerbebetriebe, Messehallen und dergleichen Kollektorfelder zum Einsatz, die eine Mehrzahl von Kollektoren umfassen, die jeweils aus mehreren Teilsträngen gebildet sind.

Die FR 2957136 A1 offenbart einen Energiezaun, der Wärme aus Umgebungsquellen wie Sonne, Regenwasser, Luft aufnimmt und einer Wärmepumpe zuführt, die einen Verbraucher mit thermischer Energie versorgt. Der Energiezaun umfasst eine oder mehrere in Serie geschaltete Kollektoreinheiten mit jeweils parallel von einem Wärmeträgerfluid durchströmbaren Wärmetauscherkanälen.

Die DE 10 2012 104996 A1 offenbart einen Latentwärmespeicher, der im saisonalen Wechsel thermisch entladen und aufgeladen wird.

Die WO 2012/032159 A2 offenbart ein Energieversorgungssystem mit einem Eisspeicher in dem ein Entzugswärmetauscher und ein Regenerationswärmetauscher angeordnet sind.

Die CH 705478 A1 offenbart ein Energieversorgungssystem mit einem Kollektorfeld in Form von Sonnenkollektoren, einer Pumpe und einem Latentwärmespeicher mit einem Tank, in dem in Behälter abgefülltes Phasenwechselmaterial in Kontakt mit Wärmeleitblechen stehen. Ein zweites Sonnenkollektorfeld ist mit einem Warmwassertank gekoppelt.

### Offenbarung der Erfindung

Eine Aufgabe der Erfindung ist es, ein verbessertes Energieversorgungssystem mit einem Latentwärmespeicher und einem Kollektorfeld anzugeben.

Eine weitere Aufgabe der Erfindung ist es, ein Verfahren zum Betreiben eines Energieversorgungssystems mit einem Kollektorfeld zu schaffen, das einen verbesserten Betrieb des Energieversorgungssystems erlaubt.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Gemäß eines Aspekts der Erfindung wird ein Verfahren zum Betreiben eines erfindungsgemäßen Energieversorgungssystems vorgeschlagen welches wenigstens einen Latentwärmespeicher sowie wenigstens ein Kollektorfeld mit einer Mehrzahl von miteinander gekoppelten Kollektoreinheiten, die mit sie umgebender Umgebungsluft in Wärmetausch stehen, sowie einen hydraulischen Kreislauf, der das Kollektorfeld mit einer gemeinsamen Einrichtung verbindet, die überwiegend als Wärmesenke und/oder wenigstens zeitweise als Wärmequelle dient und die den wenigstens einen Latentwärmespeicher und eine Wärmepumpe umfasst. Die Fördereinrichtung umfasst wenigstens zwei separate regel- und/oder steuerbare Fördereinheiten, die wenigstens zeitweise gleichzeitig betrieben werden, wobei zwei oder mehr Kollektoreinheiten des wenigstens einen Kollektorfelds von einem durch eine Fördereinrichtung mit Fördereinheiten geförderten Massenstrom eines Wärmeträgerfluids des hydraulischen Kreislaufs durchströmt werden. Dabei werden wenigstens zwei der Kollektoreinheiten jeweils von einer der jeweiligen Kollektoreinheit zugeordneten eigenen Fördereinheit mit einem Massenstrom des Wärmeträgerfluids wenigstens zeitweise gleichzeitig beaufschlagt. Der durch wenigstens einer der Fördereinheiten geförderte Massenstrom des Wärmeträgerfluids wird abhängig von wenigstens einem, einen thermischen Ertrag der jeweiligen Kollektoreinheit bestimmenden Betriebsparameter der Kollektoreinheit eingestellt.

Die im hydraulischen Kreislauf angeordnete Einrichtung ist vorzugsweise eine gemeinsam Wärmesenke des Energiespeichersystems und umfasst neben dem Latentwärmespeicher eine Wärmepumpe. Die Wärmepumpe versorgt die Einrichtung mit thermischer Energie. Der Latentwärmespeicher wird im saisonalen Wechsel thermisch entladen und aufgeladen.

Die Kollektoreinheiten des Kollektorfelds dienen zur Regeneration des Latentwärmespeichers. So kann erstarrtes Speichermedium des Latentwärmespeichers durch Wärmezufuhr wieder geschmolzen werden. Ebenso kann durch Wärmezufuhr ein Erstarren des Speichermediums gezielt verzögert werden.

Der Latentwärmespeicher weist einen Entzugswärmetauscher auf, welcher Wärme aus dem Speichermedium, beispielsweise Wasser, entzieht, welches dabei abgekühlt wird, bis es erstarrt und der Speicher damit thermisch entladen ist. Der Entzugswärmetauscher ist mit der Wärmepumpe gekoppelt, welche die aus dem Entzugswärmetauscher entzogene Wärme auf ein höheres Temperaturniveau anhebt. Das Kollektorfeld ist mit einem oder mehreren Regenerationswärmetauschern des Latentwärmespeichers gekoppelt, über die Wärme in das Speichermedium eingetragen werden kann.

Das Kollektorfeld ist vorzugsweise großflächig angelegt und nimmt Umgebungswärme, aus der Luft, auf. Günstig ist die Anordnung des Kollektorfelds auf einem Dach eines Gebäudes. Beispielsweise kann das Kollektorfeld eine Fläche von 25 bis 1000 Quadratmeter einnehmen. Pro Quadratmeter Kollektorfeldfläche können beispielsweise rund 3 bis 4 Quadratmeter, vorzugsweise 3,5 Quadratmeter, zur Luft hin exponierter Kollektoroberfläche realisiert werden. Der Betrieb des Kollektorfelds ist unabhängig von einer Sonneneinstrahlung, im Gegensatz zu Solarkollektoren oder Solarabsorbern. Ein bevorzugter Arbeitsbereich des Wärmeträgerfluids in den Kollektoreinheiten des Kollektorfelds liegt beispielsweise zwischen -15°C und +60°C. Das Wärmeträgerfluid kann beispielsweise Sole sein.

Wenigstens temporär kann die Einrichtung auch als Wärmequelle dienen. In diesem Fall kann ein Kühleffekt über die Kollektoreinheiten erreicht werden. Durch die großflächige Anordnung des Kollektorfelds kann zur Wärmeabgabe gezielt ein geeigneter Bereich des Kollektorfelds, beispielsweise ein beschatteter Bereich ohne Sonneneinstrahlung, ausgewählt werden und die Fördereinheiten der Kollektoreinheiten dort entsprechend angesteuert werden.

Dadurch, dass wenigstens zwei der Kollektoreinheiten mit jeweils einer separaten Fördereinheit verbunden sind und von der jeweils der Kollektoreinheit zugeordneten einen Fördereinheit mit einem Massenstrom des Wärmeträgerfluids beaufschlagt werden, kann der Massenstrom des Wärmeträgerfluids wenigstens einer Fördereinheit, die Wärmeträgerfluid durch die eine Kollektoreinheit fördert, abhängig von wenigstens einem Betriebsparameter wenigstens einer Kollektoreinheit eingestellt werden.

Der Betriebsparameter beeinflusst den thermischen Ertrag der jeweiligen Kollektoreinheit hinsichtlich der Aufnahme von Wärme in einem ersten Betriebsmodus oder, in einem weiteren Betriebsmodus, hinsichtlich der Abgabe von Wärme. Auf diese Weise kann im ersten Fall die Regeneration des Latentwärmespeichers optimiert werden. Im zweiten Betriebsmodus kann ein günstiger Kühleffekt über die Kollektoreinheit erreicht werden. So kann die Wärmepumpe im aktiven Kühlbetrieb statt im Heizbetrieb betrieben werden und so beispielswiese ein Gebäude im Sommer kühlen. Die überschüssige Wärme kann über das Kollektorfeld abgegeben werden. Das Leistungspotenzial des Kollektorfelds kann besser ausgenutzt werden. Die Leistung einzelner Kollektoreinheiten kann lokal und zeitlich die aktuellen Umgebungsbedingungen sowie die Eigenschaften der Kollektoreinheiten angepasst werden.

Dadurch, dass die Kollektoreinheiten jeweils eine eigene Fördereinheit aufweisen, kann auf eine teure zentrale Pumpe für das Kollektorfeld verzichtet werden. Der Betrieb des Kollektorfelds kann dynamisch und lokal differenziert erfolgen.

Gemäß einer günstigen Ausgestaltung des Verfahrens kann ein Massenstrom des Wärmeträgerfluids wenigstens einer Fördereinheit, die Wärmeträgerfluid durch wenigstens eine Kollektoreinheit fördert, abhängig von wenigstens einem der Betriebsparameter eingestellt werden:
(i) Soll-Gesamtmassenstrom durch die wenigstens eine Kollektoreinheit,
(ii) Wärmeabgabe an die Umgebung der wenigstens einen Kollektoreinheit,
(iii) Wärmeaufnahme aus der Umgebung der wenigstens einen Kollektoreinheit,
(iv) Leistungsvermögen der wenigstens einen Kollektoreinheit,
(v) Durchströmungsvermögen der wenigstens einen Kollektoreinheit.

Selbstverständlich können zwei oder mehrere der Parameter kombiniert werden. Dies kann auch bei Bedarf in dynamischer Weise erfolgen.

Vorteilhaft kann der Betrieb des Kollektorfelds verbessert werden. Die Leistung der Kollektoreinheiten des Kollektorfelds kann an einen aktuellen Bedarf angepasst werden. Einzelne Kollektoreinheiten können individuell angesteuert werden, um eine Verbesserung der Wärmeausbeute oder Wärmeabgabe zu erreichen.

Die Kollektoreinheiten in dem Kollektorfeld können vorteilhaft derart über ihre Fördereinheiten angesteuert werden, dass sie einen für die Einrichtung, insbesondere den Latentwärmespeicher, günstigen thermischen Effekt bewirken, auch wenn in einzelnen Bereichen des Kollektorfelds ungünstige Bedingungen vorliegen.

Gemäß einer günstigen Ausgestaltung können eine oder mehrere der Kollektoreinheiten in einem ersten Betriebsmodus der Einrichtung, insbesondere dem Latentwärmespeicher, Wärme zuführen. Optional können eine oder mehrere der Kollektoreinheiten in einem zweiten Betriebsmodus Wärme aus der Einrichtung, insbesondere aus dem Latentwärmespeicher, abführen. Vorteilhaft können die Fördereinheiten geregelt oder gesteuert werden. Optional können auch zusätzlich zu geregelten oder gesteuerten Fördereinheiten oder alternativ statt geregelter oder gesteuerter Fördereinheiten Regelventile den Fördereinheiten zugeordnet sein.

Es können gezielt eine oder mehrere Fördereinheiten in wenigstens einem Bereich des Kollektorfelds so betrieben werden, dass ein maximaler Wärmeeintrag von der Umgebung in die jeweilige Kollektoreinheit oder die jeweiligen Kollektoreinheiten in dem wenigstens einen Bereich erfolgt. Ebenso können gezielt eine oder mehrere Fördereinheiten in wenigstens einem Bereich des Kollektorfelds so betrieben werden, dass eine maximale Wärmeabgabe durch die jeweilige Kollektoreinheit oder die jeweiligen Kollektoreinheiten in dem wenigstens einen Bereich an die Umgebung erfolgt.

Gemäß einer günstigen Ausgestaltung des Verfahrens kann ein durch die Fördereinheit geförderter Massenstrom an Wärmeträgerfluid zur Entfernung von Blockaden, insbesondere Gasblasen, aus Kollektoreinheiten gezielt eingestellt werden. So kann eine Luftansammlung aus einer Kollektoreinheit oder einer Gruppe von Kollektoreinheiten ausgespült werden, indem der Massenstrom durch diese Kollektoreinheit oder Gruppe von Kollektoreinheiten mit der Blockade relativ zu dem Massenstrom durch die anderen Kollektoreinheiten oder Gruppen von Kollektoreinheiten kurzzeitig stark erhöht wird. Gerade bei großflächigen Kollektorfeldern ist bei bekannten Anlagen das Auffinden und Beseitigen solcher Blockaden schwierig, und Bereiche des Kollektorfelds können im ungünstigsten Fall ausfallen und nicht mehr durchströmt werden.

Wird dagegen gemäß der Erfindung eine Blockade erkannt, kann diese ohne weiteren Eingriff einfach lokal ausgespült werden.

Günstigerweise können die Kollektoreinheiten vom Wärmeträgerfluid parallel durchströmt werden. Auf diese Weise kann eine Kollektoreinheit betrieben werden, ohne benachbarte Kollektoreinheiten wesentlich zu beeinflussen.

Gemäß eines Aspekts der Erfindung wird ein Energieversorgungssystem vorgeschlagen, umfassend eine Wärmepumpe, wenigstens einen Latentwärmespeicher, einen hydraulischen Kreislauf sowie wenigstens ein Kollektorfeld, welches zwei oder mehr Kollektoreinheiten umfasst, die mit sie umgebender Umgebungsluft in Wärmetausch stehen, wobei das Kollektorfeld strömungsmäßig mit dem hydraulischen Kreislauf und wenigstens einer in dem hydraulischen Kreislauf angeordneten Einrichtung verbunden ist, welche Einrichtung den wenigstens einen Latentwärmespeicher und die Wärmepumpe umfasst. Der Latentwärmespeicher weist einen Entzugswärmetauscher auf, der mit der Wärmepumpe gekoppelt ist, und über den Wärme aus dem Speichermedium des Latentwärmespeichers zum Vorlauf der Wärmepumpe förderbar ist, welche die aus dem Entzugswärmetauscher entzogene Wärme auf ein höheres Temperaturniveau anhebt, und der Latentwärmespeicher weist wenigstens einen Regenerationswärmetauscher auf, mit dem das Kollektorfeld gekoppelt ist, und über den Wärme in das Speichermedium des Latentwärmespeichers eintragbar ist. Ebenso umfasst das Energieversorgungssystem eine Fördereinrichtung, welche im Betrieb einen Massenstrom des Wärmeträgerfluids durch die Kollektoreinheiten des Kollektorfelds fördert. Die Fördereinrichtung umfasst wenigstens zwei separate, wenigstens zeitweise gleichzeitig betreibbare, abhängig von wenigstens einem, einen thermischen Ertrag der jeweiligen Kollektoreinheit beeinflussenden Betriebsparameter der Kollektoreinheit, regel- und/oder steuerbare Fördereinheiten, wobei wenigstens zwei der Kollektoreinheiten jeweils von einer der jeweiligen Kollektoreinheit zugeordneten Fördereinheit mit einem Massenstrom des Wärmeträgerfluids wenigstens zeitweise gleichzeitig beaufschlagt werden. Zwei oder mehr Kollektoreinheiten weisen jeweils eine Mehrzahl zwischen einer Verteilerleitung und einem Sammelleitung angeordnete Wärmetauscherrohre auf, die parallel von dem Wärmeträgerfluid durchströmt werden. Der Latentwärmespeicher wird im saisonalen Wechsel thermisch entladen und aufgeladen.

Die Einrichtung dient vorzugsweise überwiegend als Wärmesenke, bei der das Kollektorfeld als Wärmequelle dient. Die Einrichtung kann optional jedoch auch, zumindest zeitweise, als Wärmequelle fungieren, so dass das Kollektorfeld, zumindest in Teilbereichen des Kollektorfelds, auch als Wärmesenke eine Kühlfunktion für die Einrichtung oder einen Teil davon bereitstellen kann. So kann die Wärmepumpe im aktiven Kühlbetrieb statt im Heizbetrieb betrieben werden und dann beispielswiese ein Gebäude im Sommer kühlen.

Durch dezentrale Fördereinheiten, insbesondere regelbare Pumpen, an den Kollektoreinheiten des Kollektorfelds kann eine flexible Anpassung des Massenstroms durch die einzelnen Kollektoreinheiten erfolgen.

Dadurch, dass das Kollektorfeld zwei oder mehr Kollektoreinheiten mit jeweils einer Mehrzahl zwischen einer Verteilerleitung und einem Sammelleitung angeordneten und parallel von dem Wärmeträgerfluid durchströmbaren Wärmetauscherrohren aufweist, ergibt sich eine günstige Konstruktion von Kollektoren, die Umgebungswärme aufnehmen sollen und die insbesondere unabhängig von einer Sonnenbestrahlung eingesetzt werden können. Derartige Kollektoreinheiten können übereinander gestapelt werden, ohne die Funktionsfähigkeit zu verlieren. Damit können bei Bedarf auch große Oberflächen zum Wärmetausch mit der Umgebung auf einer relativ kleinen Grundfläche bereitgestellt werden.

Vorteilhaft kann das Leistungspotenzial der einzelnen Kollektoreinheiten besser genutzt werden, indem eine homogene Durchströmung der Kollektoreinheiten erreicht wird und Unterschiede im Druckverlust zwischen den Kollektoreinheiten ausgeglichen werden können.

Ferner kann durch die homogenere Durchströmung der Kollektoreinheiten in dem Kollektorfeld die Eingangstemperatur des Wärmeträgerfluids an den Wärmesenken der Einrichtung, insbesondere an dem Latentwärmespeicher, angehoben werden. Die Wärmesenken können neben dem Latentwärmespeicher, bevorzugt einem Eisspeicher vorteilhaft eine Wärmepumpe und/oder ein Warmwasserspeicher umfassen.

Eine Erhöhung der Vorlauftemperatur der Wärmepumpe um 1 Kelvin generiert etwa 3% Prozent mehr Leistung an der Wärmepumpe. Es kann auch eine höhere Endtemperatur erreicht werden, so dass beispielsweise Brauchwasser mit erhöhter Temperatur, beispielsweise bis zu 50°C, ökonomisch bereitgestellt und ggfs. gespeichert werden kann. Ebenso kann eine Regeneration des Latentwärmespeichers, insbesondere Eisspeichers, verbessert werden, wenn die Eingangstemperatur des vom Kollektorfeld kommenden Wärmeträgerfluids am Latentwärmespeicher angehoben werden kann. Dieser kann bereits bei Temperaturen geringfügig über dem Gefrierpunkt Wärme zur Regeneration aufnehmen.

Gemäß einer günstigen Ausgestaltung des Energieversorgungssystems kann wenigstens eine der Kollektoreinheiten im hydraulischen Kreislauf wahlweise wenigstens zeitweise als Wärmequelle oder als Wärmesenke vorgesehen sein. So kann die Wärmepumpe im aktiven Kühlbetrieb statt im Heizbetrieb betrieben werden und so beispielswiese ein Gebäude im Sommer kühlen. Die überschüssige Wärme kann über das Kollektorfeld abgegeben werden. Dabei kann über den für die Kollektoreinheiten individuell einstellbaren Massenstrom gezielt Wärme in Bereiche des Kollektorfelds eingespeist werden, wo diese besonders effizient abgegeben werden kann, beispielsweise in beschatteten oder gut durchlüfteten Bereichen.

Gemäß einer günstigen Ausgestaltung des Energieversorgungssystems können Kollektoreinheiten im Kollektorfeld so ausgestaltet sein, dass sie bei Durchfluss eines gleichen Massenstroms des Wärmeträgerfluids einen im Wesentlichen gleichen Druckverlust aufweisen. Günstigerweise können die Kollektoreinheiten im Kollektorfeld in der so genannten Tichelmann-Technik aufgebaut sein. Dies vereinfacht den Betrieb des Kollektorfelds. Alternativ kann auch ein anderer Aufbau der Kollektoreinheiten gewählt werden, da die dezentralen Fördereinheiten es erlauben, jede Kollektoreinheit separat anzusteuern.

Gemäß einer günstigen Ausgestaltung des Energieversorgungssystems kann wenigstens einer der Fördereinheiten eine Temperatur-Überwachungseinheit zur Überwachung einer Eingangstemperatur und/oder einer Ausgangstemperatur des durch die zugehörige Kollektoreinheit strömenden Wärmeträgerfluids zugeordnet sein, wobei bevorzugt jeder der Fördereinheiten eine Temperatur-Überwachungseinheit zugeordnet sein kann. Abhängig von einer erfassten Temperatur oder Temperaturdifferenz kann die Durchströmung die Kollektoreinheiten über das Kollektorfeld räumlich differenziert und zeitlich variabel angepasst werden.

Gemäß einer günstigen Ausgestaltung des Energieversorgungssystems kann wenigstens einer der Fördereinheiten eine Massenstrom-Überwachungseinheit zur Überwachung eines durch die zugehörige Kollektoreinheit strömenden Massenstroms des Wärmeträgerfluids zugeordnet sein, wobei bevorzugt jeder Fördereinheit eine Massenstrom-Überwachungseinheit zugeordnet sein kann.

Die Durchströmung der Kollektoreinheiten kann gezielt über die erfassten Betriebsparameter angepasst werden. Abweichungen von Sollwerten können gezielt ausgeglichen werden. Die Leistung einzelner Kollektoreinheiten kann räumlich differenziert und zeitlich variabel angepasst werden.

Gemäß einer günstigen Ausgestaltung des Energieversorgungssystems können wenigstens zwei der Fördereinheiten über ein elektrisches Bus-System an eine Zentraleinheit zur Steuerung und/oder Regelung der Fördereinheiten angeschlossen sein. Insbesondere können die Temperatur-Überwachungseinheiten und/oder insbesondere die Massenstrom-Überwachungseinheiten über das elektrische Bus-System an die Zentraleinheit angeschlossen sein. Die Durchströmung des Kollektorfelds kann gezielt räumlich und zeitlich differenziert über die erfassten Betriebsparameter angepasst werden. Das Bus-System erlaubt einen einfachen Anschluss einer großen Zahl von Komponenten an die Zentraleinheit.

Gemäß einer günstigen Ausgestaltung des Energieversorgungssystems kann die wenigstens eine über den hydraulischen Kreislauf versorgte gemeinsame Einrichtung neben dem Latentwärmespeicher, vorzugsweise einem Eisspeicher, auch eine Wärmepumpe umfassen. Der Energiespeicher kann im saisonalen Wechsel entladen und aufgeladen werden. Beim Entladen des Energiespeichers wird das darin enthaltene Wärmespeichermedium über einen Entzugswärmetauscher im Energiespeicher abgekühlt, bis es erstarrt, und beim Aufladen wird das erstarrte Wärmespeichermedium wieder verflüssigt. Zum Aufladen kann über das Kollektorfeld erwärmtes Wärmeträgerfluid in einen oder mehrere Regenerationswärmetauscher geleitet werden, in welche von den Kollektoreinheiten Wärme eingespeist wird, womit das Erstarren wie auch das Verflüssigen des Wärmespeichermediums gezielt beeinflusst werden kann.

Gemäß einer günstigen Ausgestaltung des Energieversorgungssystems kann wenigstens eine der Kollektoreinheiten direkt mit der Wärmepumpe gekoppelt sein. Alternativ und zusätzlich kann wenigstens eine der Kollektoreinheiten direkt mit dem Latentwärmespeicher gekoppelt sein. Dies erlaubt eine sehr flexible und bedarfsangepasste Auslegung des Energieversorgungssystems.

Gemäß einer günstigen Ausgestaltung des Energieversorgungssystems kann das Kollektorfeld, insbesondere ein Luft-Sole-Kollektorfeld, in einem ersten Betriebsmodus dem wenigstens einen Latentwärmespeicher Wärme zuführen. Das Wärmeträgerfluid weist im Betrieb eine Arbeitstemperatur zwischen -20°C und +100°C, besonders bevorzugt zwischen -15°C und +60°C, auf.

Eine üblicherweise gemeinsame zentrale Fördereinheit, welche in dem hydraulischen Kreislauf Wärmeträgerfluid fördert und damit für alle Kollektoreinheiten des Kollektorfelds gemeinsam ist, wird vorteilhaft durch dezentrale Fördereinheiten an wenigstens zwei der Kollektoreinheiten ersetzt. Dies erlaubt eine flexible Anpassung des Massenstroms durch die einzelnen Kollektoreinheiten. Vorteilhaft kann das Leistungspotenzial der betreffenden Kollektoreinheiten besser genutzt werden, indem eine homogene Durchströmung der Kollektoreinheiten erreicht wird und Unterschiede im Druckverlust zwischen den Kollektoreinheiten ausgeglichen werden können. Solche Unterschiede können in der Praxis häufig auf aufgrund großer Leitungslängen der üblicherweise aus Rohrleitungen, insbesondere Kunststoffrohrleitungen, gefertigten Kollektoreinheiten, der manuellen Fertigung von Kollektoreinheiten und Anbindeleitungen zur Wärmesenke, etwa einem Wärmespeicher und/oder einer Wärmepumpe, auftreten. Vorteilhaft können bei allen Kollektoreinheiten dezentrale Fördereinheiten vorgesehen sein.

Durch dezentrale Fördereinheiten können darüber hinaus zeitlich veränderliche Unterschiede bei den Kollektoreinheiten, etwa durch unterschiedliche Beschattung der Kollektoreinheiten, unterschiedliche Sonneneinstrahlung auf die Kollektoreinheiten, unterschiedlichem Wärmeeintrag durch Wind und dergleichen, ausgeglichen werden. Die Fördereinheiten können vorteilhaft regel- und/oder steuerbar sein, beispielsweise als regelbare Pumpen ausgebildet sein.

Dies ist besonders günstig, wenn das Kollektorfeld in günstiger Ausgestaltung zwei oder mehr Kollektoreinheiten aufweist, von denen jede jeweils eine Mehrzahl zwischen einer Verteilerleitung und einem Sammelleitung angeordneten und parallel von dem Wärmeträgerfluid durchströmbaren Wärmetauscherrohren aufweist, die bestimmungsgemäß mit einem sie umgebenden Medium, insbesondere gasförmigen Medium, bevorzugt Umgebungsluft, in Wärmetausch stehen. Derartige Kollektoreinheiten sind gut von der sie umgebenden Umgebungsluft umströmbar, so dass ein effizienter Wärmeaustausch stattfinden kann.

Gemäß einer günstigen Ausgestaltung des Energieversorgungssystems können mindestens zwei der Kollektoreinheiten strömungsmäßig parallel geschaltet sein. Dies erlaubt eine besonders flexible Anpassung des Massenstroms durch einzelne Kollektoreinheiten gegenüber einer bekannten Vorrichtung mit einer zentralen Fördereinheit.

Bei jeder der Kollektoreinheiten ist jeweils eine Fördereinheit zum Fördern des Wärmeträgerfluids durch die jeweilige Kollektoreinheit vorgesehen. Die Durchströmung der Kollektoreinheiten kann weiter homogenisiert werden. Die dezentralen Fördereinheiten bieten weiterhin den Vorteil, dass die Durchströmung der einzelnen Kollektoreinheiten bei Bedarf verändert, insbesondere dynamisch verändert, werden kann.

Gemäß einer günstigen Ausgestaltung des Energieversorgungssystems kann wenigstens einer der Fördereinheiten eine Temperatur-Überwachungseinheit zur Überwachung einer Eingangstemperatur und/oder einer Ausgangstemperatur des durch die zugehörige Kollektoreinheit strömenden Wärmeträgerfluids zugeordnet sein.

Dies erlaubt eine dynamische Anpassung des Massenstroms durch die einzelnen Kollektorstränge und/oder durch den Kollektor abhängig von einem erfassten Temperaturunterschied und/oder einer erfassten Temperatur. Insbesondere kann die Temperatur-Überwachungseinheit zum Anschließen an ein elektrisches Bus-System vorgesehen sein. Das Bus-System erlaubt einen einfachen Anschluss einer großen Zahl von Komponenten an die Zentraleinheit und eine gezielte Einstellung der Förderleistung der Fördereinheiten abhängig von den erfassten Betriebsparametern der Kollektoreinheiten. Günstigerweise kann jeder der Fördereinheiten eine Temperatur-Überwachungseinheit zugeordnet sein.

Gemäß einer günstigen Ausgestaltung des Energieversorgungssystems kann wenigstens einer der Fördereinheiten eine Massenstrom-Überwachungseinheit zur Überwachung des durch die zugehörige Kollektoreinheit geförderten Massenstroms des Wärmeträgerfluids zugeordnet sein. Insbesondere kann die Massenstrom-Überwachungseinheit zum Anschließen an ein elektrisches Bus-System vorgesehen sein. Vorteilhaft kann eine Zentraleinheit zum Steuern und/oder Regeln der Fördereinheit vorgesehen sein. Die Durchströmung des Kollektors und/oder der einzelnen Kollektorstränge kann gezielt über die erfassten Betriebsparameter angepasst werden.

Das Bus-System erlaubt einen einfachen Anschluss einer großen Zahl von Komponenten an die Zentraleinheit und eine gezielte Einstellung der Förderleistung der Fördereinheiten abhängig von den erfassten Betriebsparametern der Kollektoreinheiten. Günstigerweise kann jeder der Fördereinheiten eine Massenstrom-Überwachungseinheit zugeordnet sein.

Gemäß einer günstigen Ausgestaltung des Energieversorgungssystems können die verschiedenen Kollektoreinheiten so ausgestaltet sein, dass sie bei gleichem Durchfluss des Massenstroms des Wärmeträgerfluids durch die individuellen Kollektoreinheiten einen im Wesentlichen gleichen Druckverlust aufweisen. Dadurch können Kollektoreinheiten im Kollektorfeld in der so genannten Tichelmann-Technik aufgebaut sein. Dies vereinfacht den Betrieb des Kollektorfelds. Alternativ kann auch ein anderer Aufbau der Kollektoreinheiten gewählt werden, da die dezentralen Fördereinheiten es erlauben, jede Kollektoreinheit separat anzusteuern.

Gemäß einer günstigen Ausgestaltung des Energieversorgungssystems können wenigstens die Kollektoreinheiten wenigstens einen Einzelkollektor und/oder wenigstens eine Gruppe von Einzelkollektoren umfassen, wobei bevorzugt wenigstens zwei der Kollektoreinheiten strömungsmäßig parallel geschaltet sein können. Dies erlaubt eine weitere flexible und dynamische Anpassung des Massenstroms durch die Kollektoreinheiten. Dabei können Einzelkollektoren innerhalb einer oder mehrerer Gruppen strömungsmäßig in Serie und/oder parallel geschaltet vorgesehen sein.

Insbesondere können Kollektoreinheiten aus zwei oder mehr Einzelkollektoren gebildet sein, die strömungsmäßig parallel und/oder seriell zusammengefasst sein können. Dies erlaubt eine Anpassung der Kollektoreinheiten an unterschiedliche Anforderungen von unterschiedlich leistungsstarken Wärmesenken im hydraulischen Kreislauf sowie einen räumlich individuell angepassten Massenstrom durch Kollektoreinheiten des Kollektorfelds.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Einzelkollektor, der vorteilhaft für ein Kollektorfeld eines Energieversorgungssystems nach einem Ausführungsbeispiel der Erfindung geeignet ist;
- Fig. 2: in schematischer Darstellung ein Energieversorgungssystem nach einem Ausführungsbeispiel der Erfindung, bei dem ein Kollektorfeld mit zwei Kollektorteilsträngen, die jeweils drei Kollektoreinheiten umfassen, vorgesehen sind, von denen ein Kollektorteilstrang über einen hydraulischen Kreislauf einen Eisspeicher und eine Wärmepumpe versorgt und der andere Kollektorteilstrang mit der Wärmepumpe und einem Warmwasserspeicher gekoppelt ist;
- Fig. 3: ein Energieversorgungssystem nach einem Ausführungsbeispiel der Erfindung zur Versorgung eines Gebäudes; und
- Fig. 4: ein Blockschema eines Kollektorfelds mit Kollektoreinheiten aus Einzelkollektoren und Gruppen von Einzelkollektoren.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

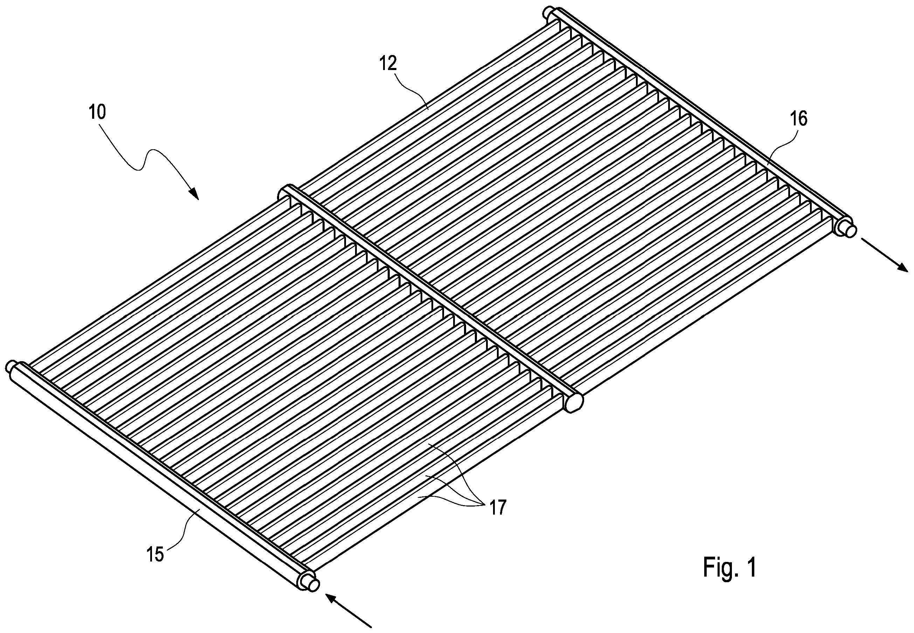

Figur 1 zeigt beispielhaft eine Kollektoreinheit 10 in Form eines Einzelkollektors, der vorteilhaft für ein Kollektorfeld eines Energieversorgungssystems nach einem Ausführungsbeispiel der Erfindung geeignet ist.

Der Einzelkollektor weist eine Mehrzahl von Wärmetauscherrohren 17 auf, von denen nur einige bezeichnet sind. Die Wärmetauscherrohre 17 erstrecken sich zwischen einer Verteilerleitung 15 und einem Sammelleitung 16 und sind parallel von dem Wärmeträgerfluid durchströmbar. Zwischen den Wärmetauscherrohren 17 ist jeweils ein Freiraum vorhanden, durch den beispielsweise Umgebungsluft strömen kann. Die zur Umgebung exponierte Oberfläche des Einzelkollektors ist demnach sehr groß. Solche Kollektoren lassen sich stapeln, so dass bei kleiner Grundfläche die zum Wärmetausch verfügbare Oberfläche der Wärmetauscherrohre 17 vervielfacht werden kann. In der gezeigten Ausführung sind die Wärmetauscherrohre 17 langgestreckt, und Verteilerleitung 15 und Sammelleitung 16 liegen sich an entgegengesetzten Enden der langgestreckten Wärmetauscherrohre 17 gegenüber.

Optional können Verteilerleitung 15 und Sammelleitung 16 auch auf derselben Seite angeordnet sein, wobei die Wärmetauscherrohre 17 jeweils eine Schlaufe bilden.

Günstig ist jeweils eine Anordnung, bei der die Wärmetauscherrohre 17 möglichst gut von Luft umströmbar sind.

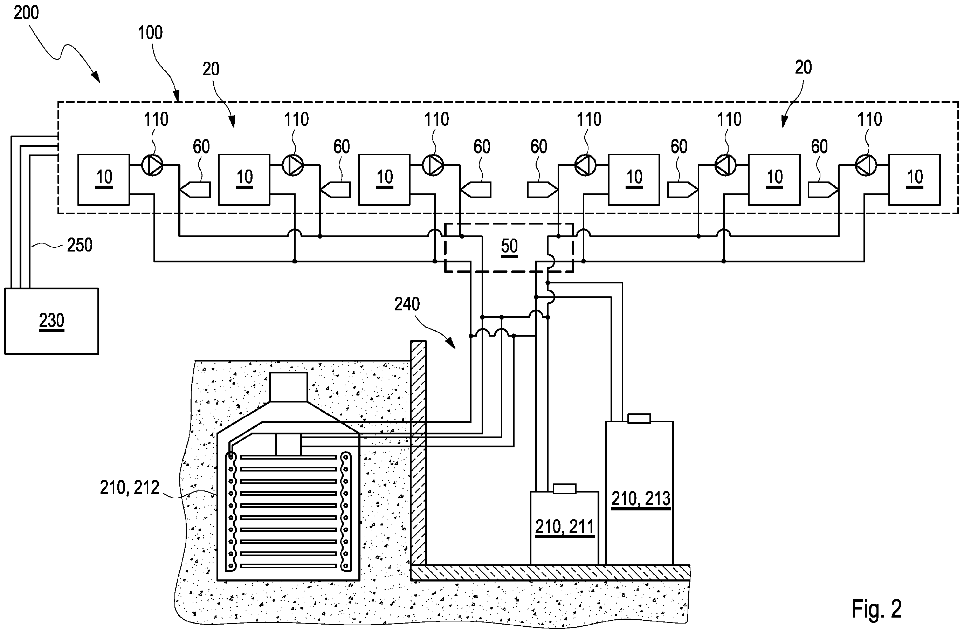

Figur 2 zeigt in schematischer Darstellung ein Energieversorgungssystem 200 nach einem Ausführungsbeispiel der Erfindung. Das Energieversorgungssystem 200 umfasst ein Kollektorfeld 100 und einen hydraulischen Kreislauf 240, in dem ein Wärmeträgerfluid zirkuliert, sowie eine Einrichtung 210, bevorzugt in Form von Wärmesenken. Das Kollektorfeld 100 versorgt die Einrichtung 210 über den hydraulischen Kreislauf 240 mit temperiertem Wärmeträgerfluid, insbesondere Sole. Eine erste Komponente der Einrichtung 210 ist eine Wärmepumpe 211, die zweite ein Latentwärmespeicher 212, beispielsweise ein Eisspeicher, während eine dritte Komponente als Warmwasserspeicher 213 ausgebildet ist. Die Wärmepumpe 211 wird zumindest zeitweise über den Latentwärmespeicher 212 mit Wärmeträgerfluid auf Vorlauftemperatur versorgt.

Die Wärmepumpe 211 und der Latentwärmespeicher 212 sind über den hydraulischen Kreislauf 240 gekoppelt. Dabei wird über das Wärmeträgerfluid, beispielsweise Sole oder dergleichen, Wärme aus dem Speichermedium des Latentwärmespeichers 212, das insbesondere Wasser sein kann, über einen Entzugswärmetauscher im Latentwärmespeicher 212 zum Vorlauf der Wärmepumpe 211 gefördert, von der Wärmepumpe 211 auf ein gewünschtes Temperaturniveau gebracht und Verbrauchern zur Verfügung gestellt. Das Kollektorfeld 100 dient für das Energieversorgungssystem 200 als Wärmequelle. Im Kollektorfeld 100 temperiertes Wärmeträgerfluid kann über einen oder mehrere im Latentwärmespeicher 212 angeordnete Regenerationswärmetauscher Wärme in das Speichermedium des Eisspeichers 212 einspeisen und dieses thermisch aufladen.

Das Kollektorfeld 100 kann in bestimmten Betriebszuständen auch als Wärmesenke dienen, etwa wenn die Wärmepumpe 211 im aktiven Kühlbetrieb als Wärmequelle arbeitet und zur Kühlung eingesetzt wird. Die Abwärme der Wärmepumpe 211 kann über das Kollektorfeld 100 an die Umwelt abgegeben werden. Ebenso kann bei Bedarf der Latentwärmespeicher 212 gekühlt werden, wenn beispielsweise ein schnelleres Entladen des Latentwärmespeichers 212 erwünscht ist.

Das Kollektorfeld 100 umfasst in diesem Ausführungsbeispiel zwei Kollektorteilstränge 20 mit je drei strömungsmäßig parallel geschalteten Kollektoreinheiten 10 in Form von Einzelkollektoren.

Jede Kollektoreinheit 10 der beiden Kollektorteilstränge 20 ist mit jeweils einer separaten Fördereinheit 110 gekoppelt, welche den Massenstrom des Wärmeträgermediums durch die jeweilige Kollektoreinheit 10 fördert. Die Fördereinheiten 110 können insbesondere regelbare oder steuerbare Pumpen, sein.

Der erste Kollektorteilstrang 20 (in der Figur links) versorgt direkt den Latentwärmespeicher 212, insbesondere zur Regeneration des Latentwärmespeichers 212. Der zweite Kollektorteilstrang 20 (in der Figur rechts) versorgt die Wärmepumpe 211 im Kollektordirektbetrieb und den Warmwasserspeicher 213.

Jeder Fördereinheit 110 im Kollektorfeld 100 ist eine Massenstrom-Überwachungseinheit 60 zugeordnet. Den Fördereinheiten 110 in jedem der Kollektorteilstränge 20 ist eine gemeinsame Temperatur-Überwachungseinheit 50 zugeordnet, wobei optional auch jeder Fördereinheit 110 eine separate Temperatur-Überwachungseinheit 50 zugeordnet sein kann.

Die Fördereinheiten 110 und die Überwachungseinheiten 50, 60 sind über ein Bus-System 250 an eine Zentraleinheit 230 angeschlossen, welche auf der Basis der erfassten Betriebsparameter des Kollektorfelds 100 und der Kollektoreinheiten 10 die Förderleistung der Fördereinheiten 110 einstellen kann.

Der hydraulische Kreislauf 240 besteht beispielsweise aus zwei Teilkreisen. Der erste Kollektorteilstrang 20 versorgt über den ersten Teilkreis den Latentwärmespeicher 212 und darüber die Wärmepumpe 211. Der Latentwärmespeicher 212 wird im saisonalen Wechsel thermisch entladen und aufgeladen. Beim thermischen Entladen des Latentwärmespeichers 212 wird das darin enthaltene Wärmespeichermedium über einen Entzugswärmetauscher im Latentwärmespeicher 212 abgekühlt, bis es erstarrt, und beim thermischen Aufladen wird das erstarrte Wärmespeichermedium wieder verflüssigt. Zum Aufladen kann über das Kollektorfeld 100 erwärmtes Wärmeträgerfluid in einen oder mehrere Regenerationswärmetauscher im Latentwärmespeicher 212 geleitet werden, womit das Erstarren wie auch das Verflüssigen des Wärmespeichermediums gezielt beeinflusst werden kann.

Der zweite Kollektorteilstrang 20 (in der Figur rechts) ist über den zweiten Teilkreis direkt mit der Wärmepumpe 211 im Kollektordirektbetrieb und mit dem Warmwasserspeicher 213 als Verbraucher verbunden.

Dadurch, dass jede Kollektoreinheit 10 der Kollektorteilstränge 20 mit einer eigenen Fördereinheit 110 gekoppelt ist, kann jeder der Kollektorteilstränge 20 und jede Kollektoreinheit 10 darin optimal mit Wärmeträgerfluid durchströmt werden. Fertigungs- und montagebedingte Heterogenitäten in der Durchströmung der einzelnen Kollektoreinheiten 10 können auf diese Weise ausgeglichen werden. Ebenso können temporäre Leistungsunterschiede einzelner Kollektoreinheiten 10 ausgeglichen werden. Der Verrohrungsaufwand wird verringert, da keine zusätzliche Verrohrung zu einer abgesetzt angeordneten zentralen Fördereinheit benötigt wird. Ferner können einzelne Kollektoreinheiten 10 durch gezielten Einsatz der Fördereinheiten 110 gezielt entlüftet werden. Beispielsweise kann eine Kollektoreinheit 10 pulsartig mit hohem Durchsatz durchströmt werden, während andere Kollektoreinheiten wenig oder gar nicht durchströmt werden. Eingeschlossene Luftblasen oder dergleichen können gezielt herausgespült werden.

Dadurch, dass einzelne Kollektoreinheiten 10 durch die Überwachungseinheiten 50, 60 überwacht werden können und der Massenstrom durch die einzelnen Kollektoreinheiten 10 entsprechend angepasst wird, kann mehr Wärme aus der Umgebung aufgenommen werden, beispielsweise bis zu 40% mehr. Der Betrieb des Kollektorfelds 100 und damit des Energieversorgungssystems 200 wird effizienter. Alternativ oder zusätzlich kann die Fläche des Kollektorfelds 100 verkleinert werden.

Die höhere Effizienz des Kollektorfelds 100 erlaubt zum einen, die durch den zweiten Kollektorteilstrang 20 bestimmte Vorlauftemperatur der Wärmepumpe 211 um einige Kelvin anzuheben, wobei eine Erhöhung um 1 Kelvin bis zu 3% mehr Leistung der Wärmepumpe 211 entspricht. Zum anderen ist durch die Ankopplung des zweiten Kollektorteilstrangs 20 an die Wärmepumpe 211 im Kollektordirektbetrieb der Wärmepumpe 211 eine hohe Endtemperatur, beispielsweise bis zu 50°C, erreichbar, was für den Warmwasserspeicher 213 nutzbar ist.

Vorteilhaft kann das Energieversorgungssystem 200 mit dem Kollektorfeld 100 so betrieben werden, dass der Massenstrom durch jeden der Kollektorteilstränge 20 und jede ihrer Kollektoreinheiten 10 abhängig von wenigstens einem Betriebsparameter des jeweiligen Kollektorteilstrangs 20 und/oder ihrer Kollektoreinheiten 10 eingestellt wird, wobei der Betriebsparameter insbesondere den thermischen Ertrag der jeweiligen Kollektoreinheit 10 beeinflusst.

Der Massenstrom des Wärmeträgerfluids kann insbesondere abhängig von wenigstens einem oder mehreren der Betriebsparameter eingestellt werden:
(i) Soll-Gesamtmassenstrom durch die von der Fördereinheit 110 beaufschlagte Kollektoreinheit 10,
(ii) Wärmeabgabe an die Umgebung der von der Fördereinheit 110 beaufschlagten Kollektoreinheit 10,
(iii) Wärmeaufnahme aus der Umgebung der von der Fördereinheit 110 beaufschlagten Kollektoreinheit 10,
(iv) Leistungsvermögen der von der Fördereinheit 110 beaufschlagten Kollektoreinheit 10,
(v) Durchströmungsvermögen der von der Fördereinheit 110 beaufschlagten Kollektoreinheit 10.

Der durch die Fördereinheit 110 geförderte Massenstrom des Wärmeträgerfluids kann gezielt zur Entfernung von Blockaden aus den Kollektoreinheiten 10 eingestellt werden.

Auf Kollektoreinheitenebene kann eine Leistungsregulierung anhand tatsächlicher Erträge der Kollektoreinheiten 10 im Kollektorfeld 100 erfolgen. Bei mehrstufigen Wärmepumpen 211 ist ebenfalls eine Leistungsregulierung möglich. Wird das Kollektorfeld 100 als Wärmesenke für den Energiespeicher 212 oder die Wärmepumpe 211 genutzt, kann ebenfalls eine Leistungsregulierung der Kollektoreinheiten 10 erfolgen.

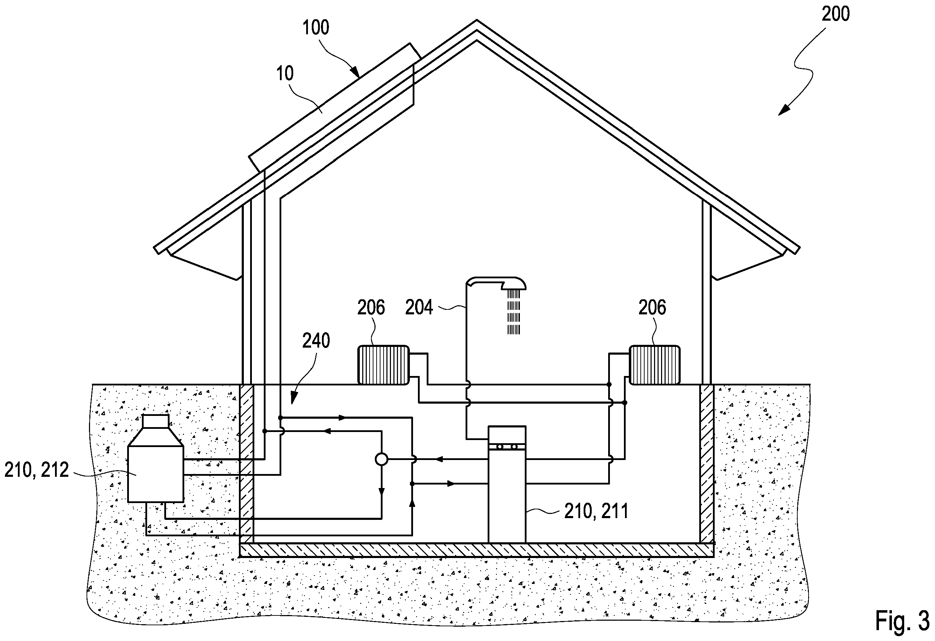

Figur 3 zeigt zur Erläuterung der Erfindung ein nicht näher bezeichnetes Gebäude mit Wärmeverbrauchern in Form einer Brauchwasserversorgung 204 und Heizkörpern oder Fußbodenheizung 206, die mit einem Energieversorgungssystem 200 gekoppelt sind, das ein Kollektorfeld 100 mit Kollektoreinheiten 10 umfasst.

Das Energieversorgungssystem 200 umfasst ein Kollektorfeld 100 mit einer Mehrzahl von Kollektoreinheiten 10, welche beispielsweise auf dem Dach des Gebäudes angeordnet sind. Andere Montagearten und Positionen sind möglich, beispielsweise liegend auf einem Flachdach, hängend als Fassadenelement oder als Zaun oder dergleichen. Die Kollektoreinheiten 10 des Kollektorfelds 100 sind von einem Wärmeträgerfluid durchströmt, beispielsweise Sole, und stellen Luft-Sole-Kollektoren dar. Das Kollektorfeld 100 ist an eine Wärmepumpe 211 als erster Wärmesenke 210 und einen Latentwärmespeicher 212 als zweite Wärmesenke 210 angeschlossen. Der Latentwärmespeicher 212 ist vorzugsweise ein Eisspeicher mit Wasser als Wärmespeichermedium und beispielsweise im Erdreich eingebaut.

Der Latentwärmespeicher 212 kann bereits bei geringen Außentemperaturen knapp über dem Gefrierpunkt, etwa ab 2°C, Wärme aus der Umgebung über das Kollektorfeld 100 zur Regeneration seines Speichermediums aufnehmen.

Sowohl der Latentwärmespeicher 212 als auch das Kollektorfeld 100 können der Wärmepumpe 211 Wärme zuführen. Die Kopplung des Kollektorfelds 100 mit der Wärmepumpe 211 erfolgt vorzugsweise indirekt über den Latentwärmespeicher 212. Die Wärmepumpe 211 hebt das Temperaturniveau der eingespeisten Wärme an und kann so z.B. für eine Gebäudeheizung und eine Brauchwasserversorgung Warmwasser bereitstellen.

Wird die Wärmepumpe 211 in einem aktiven Kühlbetrieb betrieben, etwa im Sommer, kann das Kollektorfeld 100 als Wärmesenke dienen und gegebenenfalls Abwärme der Wärmepumpe 211 an die Umgebung abgeben. Dies kann bevorzugt in Bereichen des Kollektorfelds 100 erfolgen, welche sich gut zur Abgabe von Wärme an die Umgebung eignen. Dazu werden die jeweiligen Fördereinheiten des Kollektorfelds 100 entsprechend angesteuert.

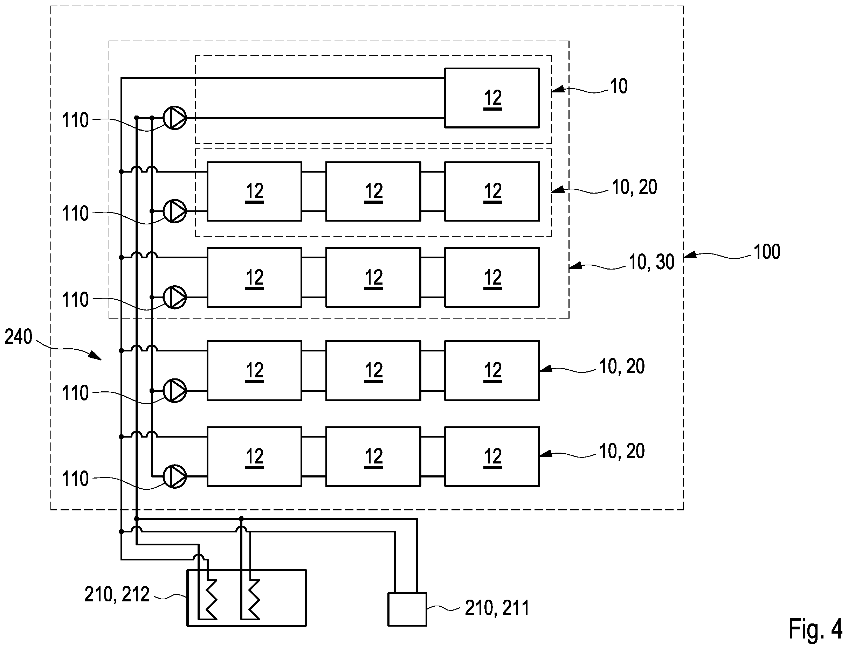

Figur 4 zeigt ein Blockschema eines Kollektorfelds 100 mit Kollektoreinheiten 10, wie sie in einem an einen hydraulischen Kreislauf 240 angeschlossenes Kollektorfeld 100 eines Energieversorgungssystems 200 eingesetzt sein können, wie es in den Figuren 2 und 3 beispielhaft beschrieben ist. Der hydraulische Kreislauf 240 verbindet das Kollektorfeld 100 mit den Komponenten der Einrichtung 210, die in Form einer Wärmepumpe 211 und eines Latentwärmespeichers 212, insbesondere eines Eisspeichers, vorliegen. Die konkrete Anordnung von Kollektoreinheiten 10 als Einzelkollektor 12 oder in Gruppen von Einzelkollektoren 12 hängt von den konkreten Anforderungen des jeweiligen Energieversorgungssystems 200 ab.

Das Kollektorfeld 100 kann ein oder mehrere Einzelkollektoren 12 als Kollektoreinheit 10 aufweisen, die jeweils von einer separaten Fördereinheit 110 versorgt werden (oben in der Figur dargestellt).

Es können eine oder mehrere Kollektoreinheiten 10 mit mehreren zusammengeschalteten Einzelkollektoren 12 vorgesehen sein, die als Kollektorteilstrang 20 zusammengefasst sind, wobei die Einzelkollektoren 12 strömungsmäßig in Serie geschaltet sind, und wobei eine separate Fördereinheit 110 den Kollektorteilstrang 20 mit einem Massenstrom des Wärmeträgerfluids versorgt.

Es können eine oder mehrere Kollektoreinheiten 10 als Kollektorteilfeld 30 mit mehreren zusammengeschalteten Kollektorteilsträngen 20 vorgesehen sein, die auch ein oder mehrere Einzelkollektoren 12 aufweisen können, die jeweils mit separaten Fördereinheiten 110 versorgt sind. Auf diese Weise lassen sich großflächige Kollektorfelder 100 günstig gestalten.

Das Kollektorfeld 100 kann neben einem oder mehreren Kollektorteilfeldern 30 ein oder mehrere Kollektorteilstränge 20 und ein oder mehrere einzelne Kollektoreinheiten 10 aufweisen, die jeweils mit separaten Fördereinheiten 110 versorgt sind.

## Patentansprüche

1. Energieversorgungssystem (200), umfassend
wenigstens einen Latentwärmespeicher (212), einen hydraulischen Kreislauf (240) sowie wenigstens ein Kollektorfeld (100), welches zwei oder mehr Kollektoreinheiten (10) umfasst,
eine Fördereinrichtung, welche im Betrieb einen Massenstrom eines Wärmeträgerfluids des hydraulischen Kreislaufs (240) durch die Kollektoreinheiten (10) des wenigstens einen Kollektorfelds (100) fördert,
sowie umfassend eine Wärmepumpe (211),
wobei das wenigstens eine Kollektorfeld (100) strömungsmäßig mit dem hydraulischen Kreislauf (240) und wenigstens einer in dem hydraulischen Kreislauf (240) angeordneten Einrichtung (210) verbunden ist,
**dadurch gekennzeichnet, dass**
die Einrichtung (210) wenigstens den Latentwärmespeicher (212) und die Wärmepumpe (211) umfasst,
der Latentwärmespeicher (212) einen Entzugswärmetauscher aufweist, der mit der Wärmepumpe (211) gekoppelt ist, und über den Wärme aus dem Speichermedium des Latentwärmespeichers (212) zum Vorlauf der Wärmepumpe (211) förderbar ist, welche die aus dem Entzugswärmetauscher entzogene Wärme auf ein höheres Temperaturniveau anhebt, und
der Latentwärmespeicher (212) wenigstens einen Regenerationswärmetauscher aufweist, mit dem das Kollektorfeld (100) gekoppelt ist, und über den Wärme in das Speichermedium des Latentwärmespeichers (212) eintragbar ist;
das Kollektorfeld (100) zwei oder mehr Kollektoreinheiten (10) umfasst, die mit sie umgebender Umgebungsluft in Wärmetausch stehen,
die Fördereinrichtung wenigstens zwei separate, wenigstens zeitweise gleichzeitig betreibbare, abhängig von wenigstens einem, einen thermischen Ertrag der jeweiligen Kollektoreinheit (10) beeinflussenden Betriebsparameter der Kollektoreinheit (10) regel- und/oder steuerbare Fördereinheiten (110) umfasst, wobei
wenigstens zwei der Kollektoreinheiten (10) jeweils von einer der jeweiligen Kollektoreinheiten (10) zugeordneten Fördereinheit (110) mit einem Massenstrom des Wärmeträgerfluids wenigstens zeitweise gleichzeitig beaufschlagt werden.

2. Energieversorgungssystem nach Anspruch 1, **dadurch gekennzeichnet, dass** wenigstens eine der Kollektoreinheiten (10) wahlweise wenigstens zeitweise als Wärmequelle oder als Wärmesenke vorgesehen ist.

3. Energieversorgungssystem nach Anspruch 1 oder 2, wobei das Kollektorfeld (100) zwei oder mehr Kollektoreinheiten (10) mit jeweils einer Mehrzahl zwischen einer Verteilerleitung (15) und einem Sammelleitung (16) angeordneten und parallel von dem Wärmeträgerfluid durchströmbaren Wärmetauscherrohren (17) aufweist.

4. Energieversorgungssystem nach Anspruch 1 bis 3, **dadurch gekennzeichnet, dass** wenigstens einer der Fördereinheiten (110) eine Temperatur-Überwachungseinheit (50) zur Überwachung einer Eingangstemperatur und/oder einer Ausgangstemperatur des durch die zugehörige Kollektoreinheit (10) strömenden Wärmeträgerfluids zugeordnet ist, wobei bevorzugt jeder der Fördereinheiten (110) eine Temperatur-Überwachungseinheit (50) zugeordnet ist,
und/oder dass wenigstens einer der Fördereinheiten (110) eine Massenstrom-Überwachungseinheit (60) zur Überwachung eines durch die zugehörige Kollektoreinheit (10) strömenden Massenstroms des Wärmeträgerfluids zugeordnet ist, wobei bevorzugt jeder Fördereinheiten (110) eine Massenstrom-Überwachungseinheit (60) zugeordnet ist.

5. Energieversorgungssystem nach einem der Ansprüche 1 bis 4, **dadurch gekennzeichnet, dass** wenigstens zwei der Fördereinheiten (110) über ein elektrisches Bus-System (250) an eine Zentraleinheit (230) zur Steuerung und/oder Regelung der Fördereinheiten (110) angeschlossen sind und insbesondere die Temperatur-Überwachungseinheiten (50) und/oder insbesondere die Massenstrom-Überwachungseinheiten (60) über das elektrische Bus-System (250) an die Zentraleinheit (230) angeschlossen sind.

6. Energieversorgungssystem nach einem der Ansprüche 1 bis 5, **dadurch gekennzeichnet, dass** wenigstens eine der Kollektoreinheiten (10) direkt mit der Wärmepumpe (211) gekoppelt ist und/oder wobei vorzugsweise wenigstens eine der Kollektoreinheiten (10) direkt mit dem Energiespeicher (212) gekoppelt ist.

7. Energieversorgungssystem nach einem der Ansprüche 1 bis 6, **dadurch gekennzeichnet, dass** das Kollektorfeld (100) zwei oder mehr Kollektoreinheiten (10) mit jeweils einer Mehrzahl zwischen einer Verteilerleitung (15) und einem Sammelleitung (16) angeordneten und parallel von dem Wärmeträgerfluid durchströmbaren Wärmetauscherrohren (17) aufweist, die bestimmungsgemäß mit sie umgebender Umgebungsluft in Wärmetausch stehen.

8. Energieversorgungssystem nach einem der Ansprüche 1 bis 7, **dadurch gekennzeichnet, dass** wenigstens einer der Fördereinheiten (110) eine Temperatur-Überwachungseinheit (50) zur Überwachung einer Eingangstemperatur und/oder einer Ausgangstemperatur des durch die zugehörige Kollektoreinheit (10) strömenden Wärmeträgerfluids zugeordnet ist, wobei bevorzugt jeder der Fördereinheiten (110) eine Temperatur-Überwachungseinheit (50) zugeordnet ist,
und/oder dass wenigstens einer der Fördereinheiten (110) eine Massenstrom-Überwachungseinheit (60) zur Überwachung eines durch die zugehörige Kollektoreinheit (10) strömenden Massenstroms des Wärmeträgerfluids zugeordnet ist, wobei bevorzugt jeder der Fördereinheiten (110) eine Massenstrom-Überwachungseinheit (60) zugeordnet ist.

9. Energieversorgungssystem nach einem der Ansprüche 1 bis 8, **dadurch gekennzeichnet, dass** die Kollektoreinheiten (10) wenigstens einen Einzelkollektor (12) und/oder wenigstens eine Gruppe (20, 30) von Einzelkollektoren (12) umfassen, wobei bevorzugt wenigstens zwei der Kollektoreinheiten (10) strömungsmäßig parallel geschaltet sind.

10. Verfahren zum Betreiben eines Energieversorgungssystems (200) nach einem der Ansprüche 1 bis 9, welches Energieversorgungssystem (200) umfasst
wenigstens einen Latentwärmespeicher (212) sowie wenigstens ein Kollektorfeld (100) mit einer Mehrzahl von miteinander gekoppelten Kollektoreinheiten (10), sowie einen hydraulischer Kreislauf (240), der das Kollektorfeld (100) mit einer gemeinsamen Einrichtung (210) verbindet, die überwiegend als Wärmesenke und/oder wenigstens zeitweise als Wärmequelle dient und die den wenigstens einen Latentwärmespeicher (212) sowie eine Wärmepumpe (211) umfasst,
**dadurch gekennzeichnet, dass**
die Fördereinrichtung wenigstens zwei separate regel- und/oder steuerbare Fördereinheiten (110) umfasst, die wenigstens zeitweise gleichzeitig betrieben werden,
wobei zwei oder mehr Kollektoreinheiten (10) des wenigstens einen Kollektorfelds (100) von einem durch eine Fördereinrichtung mit Fördereinheiten (110) geförderten Massenstrom eines Wärmeträgerfluids des hydraulischen Kreislaufs (240) durchströmt werden,
wobei wenigstens zwei der Kollektoreinheiten (10) jeweils von einer der jeweiligen Kollektoreinheit (10) zugeordneten eigenen Fördereinheit (110) mit einem Massenstrom des Wärmeträgerfluids wenigstens zeitweise gleichzeitig beaufschlagt werden,
dass der Latentwärmespeicher (212) einen Entzugswärmetauscher aufweist, der mit der Wärmepumpe (211) gekoppelt ist, und über den Wärme aus dem Speichermedium des Latentwärmespeichers (212) zum Vorlauf der Wärmepumpe (211) gefördert wird, welche die aus dem Entzugswärmetauscher entzogene Wärme auf ein höheres Temperaturniveau anhebt, und
der Latentwärmespeicher (212) wenigstens einen Regenerationswärmetauscher aufweist, mit dem das Kollektorfeld (100) gekoppelt ist, und über den Wärme in das Speichermedium des Latentwärmespeichers (212) eingetragen wird, wobei die Kollektoreinheiten mit sie umgebender Umgebungsluft in Wärmetausch stehen
wobei der durch wenigstens einer der Fördereinheiten (110) geförderte Massenstrom des Wärmeträgerfluids abhängig von wenigstens einem, einen thermischen Ertrag der jeweiligen Kollektoreinheit (10) beeinflussenden Betriebsparameter der Kollektoreinheit (10) eingestellt wird.

11. Verfahren nach Anspruch 10, wobei ein Massenstrom des Wärmeträgerfluids durch die wenigstens eine Fördereinheit (110), die Wärmeträgerfluid durch wenigstens eine der Kollektoreinheiten (10) fördert, abhängig von wenigstens einem der Betriebsparameter eingestellt wird:
(i) Soll-Gesamtmassenstrom durch die wenigstens eine Kollektoreinheit (10),
(ii) Wärmeabgabe an die Umgebung der wenigstens einen Kollektoreinheit (10),
(iii) Wärmeaufnahme aus der Umgebung der wenigstens einen Kollektoreinheit (10),
(iv) Leistungsvermögen der wenigstens einen Kollektoreinheit (10),
(v) Durchströmungsvermögen der wenigstens einen Kollektoreinheit (10).

12. Verfahren nach Anspruch 10 oder 11, wobei eine oder mehrere der Kollektoreinheiten (10) in einem ersten Betriebsmodus der Einrichtung (210), insbesondere dem Latentwärmespeicher (212), Wärme zuführen.

13. Verfahren nach einem der Ansprüche 10 bis 12, wobei eine oder mehrere der Kollektoreinheiten (10) in einem zweiten Betriebsmodus Wärme aus der Einrichtung (210), insbesondere aus dem Latentwärmespeicher (212), abführen.

14. Verfahren nach einem der Ansprüche 10 bis 13, wobei die Fördereinheiten (110) geregelt oder gesteuert werden.

15. Verfahren nach einem der Ansprüche 10 bis 14, wobei ein durch die Fördereinheit (110) geförderter Massenstrom des Wärmeträgerfluids zur Entfernung von Blockaden, insbesondere von Gasblasen, aus wenigstens einer Kollektoreinheit (10) gezielt eingestellt wird.

16. Verfahren nach Anspruch 15, wobei der durch die blockierte Kollektoreinheit (10) geförderte Massenstrom des Wärmeträgerfluids relativ zu dem Massenstrom durch andere Kollektoreinheiten (10) erhöht wird.

17. Verfahren nach einem der Ansprüche 10 bis 16, wobei gezielt eine oder mehrere Fördereinheiten (110) in wenigstens einem Bereich des Kollektorfelds (100) so betrieben werden, dass ein maximaler Wärmeeintrag von der Umgebung in die jeweilige Kollektoreinheit (10) oder die jeweiligen Kollektoreinheiten (10) in dem wenigstens einen Bereich erfolgt.

18. Verfahren nach einem der Ansprüche 10 bis 17, wobei gezielt eine oder mehrere Fördereinheiten (110) in wenigstens einem Bereich des Kollektorfelds (100) so betrieben werden, dass eine maximale Wärmeabgabe durch die jeweilige Kollektoreinheit (10) oder die jeweiligen Kollektoreinheiten (10) in dem wenigstens einen Bereich an die Umgebung erfolgt.

19. Verfahren nach einem der Ansprüche 10 bis 18, **dadurch gekennzeichnet, dass** das Kollektorfeld (100) dem Latentwärmespeicher (212) in einem ersten Betriebsmodus Wärmezuführt,
wobei das Wärmeträgerfluid im Betrieb eine Arbeitstemperatur zwischen -20°C und +100°C aufweist.

## Claims

1. Energy supply system (200), comprising
at least one latent heat accumulator (212), one hydraulic circuit (240) and also at least one collector array (100), which comprises two or more collector units (10),
a conveying apparatus, which, during operation, conveys a mass flow of a heat transfer fluid of the hydraulic circuit (240) through the collector units (10) of the at least one collector array (100),
and also comprising a heat pump (211),
whereby the at least one collector array (100) is connected in respect of flow with the hydraulic circuit (240) and at least one apparatus (210) arranged in the hydraulic circuit (240), **characterised in that**
the apparatus (210) comprises at least the latent heat accumulator (212) and the heat pump (211),
the latent heat accumulator (212) has an extraction heat exchanger, which is coupled with the heat pump (211), and via which heat from the storage medium of the latent heat accumulator (212) can be conveyed to the flow of the heat pump (211), which raises the heat extracted from the extraction heat exchanger to a higher temperature level, and
the latent heat accumulator (212) has at least one regeneration heat exchanger, with which the collector array (100) is coupled, and via which heat can be transferred into the storage medium of the latent heat accumulator (212);
the collector array (100) comprises two or more collector units (10), which are in heat exchange with ambient air surrounding them,
the conveying apparatus comprises at least two separate conveying units (110), controllable by way of closed-loop and/or open-loop control and operable at least at times simultaneously, depending on at least one operating parameter of the collector unit (10) that influences a thermal output of the particular collector unit (10), whereby
at least two of the collector units (10) are each supplied at least at times simultaneously with a mass flow of the heat transfer fluid by a conveying unit (110) assigned to one of the particular collector units (10).

2. Energy supply system according to claim 1, **characterised in that** at least one of the collector units (10) is optionally provided at least at times as heat source or as heat sink.

3. Energy supply system according to claim 1 or 2, whereby the collector array (100) has two or more collector units (10), each with a plurality of heat exchanger tubes (17) arranged between a distribution line (15) and a collecting line (16) and through which the heat transfer fluid can flow in parallel.

4. Energy supply system according to claim 1 to 3, **characterised in that** a temperature monitoring unit (50) is assigned to at least one of the conveying units (110) to monitor an entry temperature and/or an exit temperature of the heat transfer fluid flowing through the associated collector unit (10), whereby preferably a temperature monitoring unit (50) is assigned to each of the conveying units (110),
and/or that a mass-flow monitoring unit (60) is assigned to at least one of the conveying units (110) to monitor a mass flow of the heat transfer fluid flowing through the associated collector unit (10), whereby preferably a mass-flow monitoring unit (60) is assigned to each of the conveying units (110).

5. Energy supply system according to any one of claims 1 to 4, **characterised in that** at least two of the conveying units (110) are connected via an electric bus system (250) to a central unit (230) for open-loop and/or closed-loop control of the conveying units (110) and in particular the temperature monitoring units (50) and/or in particular the mass-flow monitoring units (60) are connected via the electric bus system (250) to the central unit (230).

6. Energy supply system according to any one of claims 1 to 5, **characterised in that** at least one of the collector units (10) is coupled directly with the heat pump (211) and/or whereby preferably at least one of the collector units (10) is coupled directly with the energy store (212).

7. Energy supply system according to any one of claims 1 to 6, **characterised in that** the collector array (100) has two or more collector units (10), each with a plurality of heat exchanger tubes (17) arranged between a distribution line (15) and a collecting line (16) and through which the heat transfer fluid can flow in parallel and which are in heat exchange with ambient air surrounding them, as intended.

8. Energy supply system according to any one of claims 1 to 7, **characterised in that** a temperature monitoring unit (50) is assigned to at least one of the conveying units (110) to monitor an entry temperature and/or an exit temperature of the heat transfer fluid flowing through the associated collector unit (10), whereby preferably a temperature monitoring unit (50) is assigned to each of the conveying units (110),
and/or that a mass-flow monitoring unit (60) is assigned to at least one of the conveying units (110) to monitor a mass flow of the heat transfer fluid flowing through the associated collector unit (10), whereby preferably a mass-flow monitoring unit (60) is assigned to each of the conveying units (110).

9. Energy supply system according to any one of claims 1 to 8, **characterised in that** the collector units (10) comprise at least one individual collector (12) and/or at least one group (20, 30) of individual collectors (12), whereby preferably at least two of the collector units (10) are connected in parallel in respect of flow.

10. Method for operating an energy supply system (200) according to any one of claims 1 to 9, which energy supply system (200) comprises
at least one latent heat accumulator (212) and also at least one collector array (100) with a plurality of collector units (10) coupled to each other, and also an hydraulic circuit (240), connecting the collector array (100) with a joint apparatus (210), which serves primarily as heat sink and/or at least at times as heat source and which comprises the at least one latent heat accumulator (212) and also a heat pump (211),
**characterised in that**
the conveying apparatus comprises at least two separate conveying units (110) controllable by way of closed-loop and/or open-loop control, which are operated at least at times simultaneously,
whereby a mass flow of a heat transfer fluid of the hydraulic circuit (240) conveyed by a conveying apparatus with conveying units (110) flows through two or more collector units (10) of the at least one collector array (100),
whereby at least two of the collector units (10) are each supplied at least at times simultaneously with a mass flow of the heat transfer fluid by a dedicated conveying unit (110) assigned to the particular collector unit (10),
that the latent heat accumulator (212) has an extraction heat exchanger, which is coupled with the heat pump (211), and via which heat from the storage medium of the latent heat accumulator (212) is conveyed to the flow of the heat pump (211), which raises the heat extracted from the extraction heat exchanger to a higher temperature level, and
the latent heat accumulator (212) has at least one regeneration heat exchanger, with which the collector array (100) is coupled, and via which heat is transferred into the storage medium of the latent heat accumulator (212), whereby the collector units are in heat exchange with ambient air surrounding them,
whereby the mass flow of the heat transfer fluid conveyed by at least one of the conveying units (110) is adjusted, depending on at least one operating parameter of the collector unit (10) that influences a thermal output of the particular collector unit (10).

11. Method according to claim 10, whereby a mass flow of the heat transfer fluid through the at least one conveying unit (110) that conveys heat transfer fluid through at least one of the collector units (10) is adjusted, depending on at least one of the operating parameters:
(i) target total mass flow through the at least one collector unit (10),
(ii) release of heat to the surroundings of the at least one collector unit (10),
(iii) absorption of heat from the surroundings of the at least one collector unit (10),
(iv) productive capacity of the at least one collector unit (10),
(v) flow capacity of the at least one collector unit (10).

12. Method according to claim 10 or 11, whereby one or more of the collector units (10), in a first operating mode, feed heat to the apparatus (210), in particular to the latent heat accumulator (212).

13. Method according to any one of claims 10 to 12, whereby one or more of the collector units (10), in a second operating mode, remove heat from the apparatus (210), in particular from the latent heat accumulator (212).

14. Method according to any one of claims 10 to 13, whereby the conveying units (110) are controlled through closed-loop or open-loop control.

15. Method according to any one of claims 10 to 14, whereby a mass flow of the heat transfer fluid conveyed by the conveying unit (110) is adjusted in a targeted manner to remove blocks, in particular gas bubbles, from at least one collector unit (10).

16. Method according to claim 15, whereby the mass flow of the heat transfer fluid conveyed through the blocked collector unit (10) is increased relative to the mass flow through other collector units (10).

17. Method according to any one of claims 10 to 16, whereby one or more conveying units (110) is operated in a targeted manner in at least one region of the collector array (100), such that there is a maximum input of heat from the surroundings into the particular collector unit (10) or the particular collector units (10) in the at least one region.

18. Method according to any one of claims 10 to 17, whereby one or more conveying units (110) is operated in a targeted manner in at least one region of the collector array (100), such that there is a maximum release of heat to the surroundings through the particular collector unit (10) or the particular collector units (10) in the at least one region.

19. Method according to any one of claims 10 to 18, **characterised in that** the collector array (100) feeds heat to the latent heat accumulator (212) in a first operating mode,
whereby the heat transfer fluid in operation has a working temperature between -20 °C and +100 °C.

## Revendications

1. Système d'approvisionnement en énergie (200) comprenant
au moins un accumulateur de chaleur latente (212), un circuit hydraulique (240) ainsi qu'au moins un champ de collecteurs (100) qui comprend deux ou plus unités de collecteurs (10),
un dispositif de transport qui transporte en fonctionnement un courant massique d'un fluide caloporteur du circuit hydraulique (240) par les unités de collecteurs (10) d'au moins un champ de collecteurs (100),
ainsi que comprenant une pompe à chaleur (211),
dans lequel l'au moins un champ de collecteurs (100) est relié en écoulement au circuit hydraulique (240) et au moins à un dispositif (210) agencé dans le circuit hydraulique (240),
**caractérisé en ce que**
le dispositif (210) comprend au moins l'accumulateur de chaleur latente (212) et la pompe à chaleur (211),
l'accumulateur de chaleur latente (212) présente un échangeur de chaleur de prélèvement qui est couplé à la pompe à chaleur (211), et par lequel de la chaleur peut être transportée du milieu d'accumulateur de l'accumulateur de chaleur latente (212) à la canalisation montante de la pompe à chaleur (211) qui augmente la chaleur prélevée de l'échangeur de chaleur de prélèvement à un niveau de température plus élevé, et
l'accumulateur de chaleur latente (212) présente au moins un échangeur de chaleur de régénération, avec lequel le champ de collecteurs (100) est couplé et par lequel de la chaleur peut être insérée dans le milieu d'accumulateur de l'accumulateur de chaleur latente (212) ;
le champ de collecteurs (100) comprend deux ou plus unités de collecteurs (10) qui sont en échange de chaleur avec de l'air ambiant l'entourant,
le dispositif de transport comprend au moins deux unités de transport (110) séparées, actionnables au moins temporairement simultanément, régulables et/ou commandables en fonction d'au moins un paramètre de fonctionnement influençant un rendement thermique de l'unité de collecteurs (10) respective de l'unité de collecteurs (10), dans lequel
au moins deux des unités de collecteurs (10) sont alimentées respectivement par une unité de transport (110) associée aux unités de collecteurs (10) respectives en un courant massique du fluide caloporteur au moins temporairement simultanément.

2. Système d'approvisionnement en énergie selon la revendication 1, **caractérisé en ce qu'**au moins une des unités de collecteurs (10) est prévue au choix au moins temporairement comme source de chaleur ou comme dissipateur de chaleur.

3. Système d'approvisionnement en énergie selon la revendication 1 ou 2, dans lequel le champ de collecteurs (100) présente deux ou plus unités de collecteurs (10) avec respectivement une pluralité de tubes d'échangeur de chaleur (17) agencés entre une conduite de distribution (15) et une conduite collectrice (16) et pouvant être traversés parallèlement par le fluide caloporteur.

4. Système d'approvisionnement en énergie selon la revendication 1 à 3, **caractérisé en ce qu'**une unité de surveillance de température (50) est associée à au moins une des unités de transport (110) pour la surveillance d'une température d'entrée et/ou d'une température de sortie du fluide caloporteur s'écoulant à travers l'unité de collecteurs (10) afférente, dans lequel de préférence une unité de surveillance de température (50) est associée à chacune des unités de transport (110),
et/ou qu'une unité de surveillance de courant massique (60) est associée à au moins une des unités de transport (110) pour la surveillance d'un courant massique s'écoulant à travers l'unité de collecteurs (10) afférente du fluide caloporteur, dans lequel de préférence une unité de surveillance de courant massique (60) est associée à chacune des unités de transport (110).

5. Système d'approvisionnement en énergie selon l'une des revendications 1 à 4, **caractérisé en ce qu'**au moins deux des unités de transport (110) sont raccordées par un système de bus (250) électrique à une unité centrale (230) pour la commande et/ou la régulation des unités de transport (110) et en particulier les unités de surveillance de température (50) et/ou en particulier les unités de surveillance de courant massique (60) sont raccordées par le système de bus (250) électrique à l'unité centrale (230).

6. Système d'approvisionnement en énergie selon l'une des revendications 1 à 5, **caractérisé en ce qu'**au moins une des unités de collecteurs (10) est directement couplée à la pompe à chaleur (211) et/ou dans lequel de préférence au moins une des unités de collecteurs (10) est directement couplée à l'accumulateur d'énergie (212).

7. Système d'approvisionnement en énergie selon l'une des revendications 1 à 6, **caractérisé en ce que** le champ de collecteurs (100) présente deux ou plus unités de collecteurs (10) avec respectivement une pluralité de tubes d'échangeur de chaleur (17) agencés entre une conduite de distribution (15) et une conduite collectrice (16) et pouvant être traversés parallèlement par le fluide caloporteur, qui sont en liaison d'échange selon les dispositions avec de l'air ambiant l'entourant.

8. Système d'approvisionnement en énergie selon l'une des revendications 1 à 7, **caractérisé en ce qu'**une unité de surveillance de température (50) est associée à au moins une des unités de transport (110) pour la surveillance d'une température d'entrée et/ou d'une température de sortie du fluide caloporteur s'écoulant à travers l'unité de collecteurs (10) afférente, dans lequel de préférence une unité de surveillance de température (50) est associée à chacune des unités de transport (110),
et/ou qu'une unité de surveillance de courant massique (60) est associée à au moins une des unités de transport (110) pour la surveillance d'un courant massique s'écoulant à travers l'unité de collecteurs (10) afférente du fluide caloporteur, dans lequel de préférence une unité de surveillance de courant massique (60) est associée à chacune des unités de transport (110).

9. Système d'approvisionnement en énergie selon l'une des revendications 1 à 8, **caractérisé en ce que** les unités de collecteurs (10) comprennent au moins un collecteur individuel (12) et/ou au moins un groupe (20, 30) de collecteurs individuels (12), dans lequel de préférence au moins deux des unités de collecteurs (10) sont montées en écoulement parallèlement.

10. Procédé de fonctionnement d'un système d'approvisionnement en énergie (200) selon l'une des revendications 1 à 9, lequel système d'approvisionnement en énergie (200) comprend
au moins un accumulateur de chaleur latente (212) ainsi qu'au moins un champ de collecteurs (100) avec une pluralité d'unités de collecteurs (10) couplées les unes aux autres, ainsi qu'un circuit hydraulique (240) qui relie le champ de collecteurs (100) à un dispositif commun (210) qui sert principalement de dissipateur de chaleur et/ou au moins temporairement de source de chaleur et qui comprend l'au moins un accumulateur de chaleur latente (212) ainsi qu'une pompe à chaleur (211),
**caractérisé en ce que**
le dispositif de transport comprend au moins deux unités de transport (110) régulables et/ou commandables séparées qui sont actionnées au moins temporairement simultanément,
dans lequel deux ou plus unités de collecteurs (10) d'au moins un champ de collecteurs (100) sont traversées par un courant massique transporté par un dispositif de transport avec des unités de transport (110) d'un fluide caloporteur du circuit hydraulique (240),
dans lequel au moins deux des unités de collecteurs (10) sont alimentées respectivement par une propre unité de transport (110) associée à l'unité de collecteurs (10) respective en un courant massique du fluide caloporteur au moins temporairement simultanément,
**que** l'accumulateur de chaleur latente (212) présente un échangeur de chaleur de prélèvement qui est couplé à la pompe à chaleur (211), et par lequel de la chaleur est transportée du milieu d'accumulateur de l'accumulateur de chaleur latente (212) à la canalisation montante de la pompe à chaleur (211) qui augmente la chaleur prélevée de l'échangeur de chaleur de prélèvement à un niveau de température plus élevé, et
l'accumulateur de chaleur latente (212) présente au moins un échangeur de chaleur de régénération, avec lequel le champ de collecteurs (100) est couplé, et par lequel de la chaleur est insérée dans le milieu d'accumulateur de l'accumulateur de chaleur latente (212), dans lequel les unités de collecteurs sont en échange de chaleur avec de l'air ambiant l'entourant,
dans lequel le courant massique transporté par au moins une des unités de transport (110) du fluide caloporteur est réglé en fonction d'au moins un paramètre de fonctionnement influençant un rendement thermique de l'unité de collecteurs (10) respective de l'unité de collecteurs (10).

11. Procédé selon la revendication 10, dans lequel un courant massique du fluide caloporteur est réglé par l'au moins une unité de transport (110) qui transporte du fluide caloporteur par au moins une des unités de collecteurs (10), en fonction d'au moins un des paramètres de fonctionnement :
(i) un courant massique global de consigne par l'au moins une unité de collecteurs (10),
(ii) un dégagement de chaleur vers l'environnement d'au moins une unité de collecteurs (10),
(iii) une absorption de chaleur de l'environnement d'au moins une unité de collecteurs (10),
(iv) une capacité de puissance d'au moins une unité de collecteurs (10),
(v) une capacité de traversée d'au moins une unité de collecteurs (10).

12. Procédé selon la revendication 10 ou 11, dans lequel une ou plusieurs unités de collecteurs (10) amènent de la chaleur dans un premier mode de fonctionnement du dispositif (210), en particulier à l'accumulateur de chaleur latente (212).

13. Procédé selon l'une des revendications 10 à 12, dans lequel une ou plusieurs unités de collecteurs (10) évacuent de la chaleur dans un second mode de fonctionnement du dispositif (210), en particulier de l'accumulateur de chaleur latente (212).

14. Procédé selon l'une des revendications 10 à 13, dans lequel les unités de transport (110) sont régulées ou commandées.

15. Procédé selon l'une des revendications 10 à 14, dans lequel un courant massique transporté par l'unité de transport (110) du fluide caloporteur est réglé de manière ciblée pour le retrait de blocages, en particulier de soufflures, d'au moins une unité de collecteurs (10).

16. Procédé selon la revendication 15, dans lequel le courant massique transporté par l'unité de collecteurs (10) bloquée du fluide caloporteur est augmenté par rapport au courant massique transporté par d'autres unités de collecteurs (10).

17. Procédé selon l'une des revendications 10 à 16, dans lequel une ou plusieurs unités de transport (110) sont actionnées de manière ciblée dans au moins une zone du champ de collecteurs (100) de sorte qu'un apport de chaleur maximale soit effectué de l'environnement dans l'unité de collecteurs (10) respective ou les unités de collecteurs (10) respectives dans l'au moins une zone.

18. Procédé selon l'une des revendications 10 à 17, dans lequel une ou plusieurs unités de transport (110) sont actionnées de manière ciblée dans au moins une zone du champ de collecteurs (100) de sorte qu'un dégagement de chaleur maximal soit effectué par l'unité de collecteurs (10) respective ou les unités de collecteurs (10) respectives dans l'au moins une zone à l'environnement.

19. Procédé selon l'une des revendications 10 à 18, **caractérisé en ce que** le champ de collecteurs (100) amène de la chaleur à l'accumulateur de chaleur latente (212) dans un premier mode de fonctionnement,
dans lequel le fluide caloporteur présente en fonctionnement une température de travail entre -20 °C et +100 °C.
